# FASCICULE DE BREVET EUROPEEN

(11) **EP 1 674 160 B1**
(45) Date de publication et mention de la délivrance du brevet: **13.02.2008**
(21) Numéro de dépôt: 05301081.5
(22) Date de dépôt: 20.12.2005
(51) Int. Cl.: B03C 3/017, F01N 3/08

(54) **Filtre à particules pour le traitement de gaz d'échappement issus d'un moteur à combustion interne de véhicule automobile et procédé de filtrage de gaz d'échappement correspondant**
Partikelfilter zur Abgasnachbehandlung eines Verbrennungsmotors eines Kraftfahrzeuges und entsprechendes Verfahren zur Filtrierung von Abgaspartikeln
Particulate filter for the exhaust gas after-treatment of an internal combustion engine of a motor vehicle and corresponding method for filtering exhaust gas particulates

(30) Priorité: 27.12.2004 FR 0413946
(43) Date de publication de la demande: 28.06.2006
(73) Titulaire: RENAULT S.A.S., 92100 Boulogne Billancourt (FR)
(72) Inventeur: Boichot, Raphael, 06130, GRASSE (FR)

(56) Documents cités:
- FR-A- 834 510
- US-A- 4 718 923
- US-A- 4 871 515

## Description

L'invention a trait au traitement de composants polluants contenus dans un milieu gazeux et concerne, en particulier, le domaine des dispositifs de filtrage des gaz d'échappement.

Plus particulièrement, l'invention se rapporte à un filtre à particules destiné à être monté sur la ligne d'échappement d'un véhicule automobile.

On connaît, à ce jour, divers systèmes de filtrage des particules des gaz d'échappement issus d'un moteur à combustion interne. On connaît, par exemple, par la demande de brevet WO 01/19525, un ensemble de filtrage de gaz chargé de particules comprenant un filtre électrostatique à effet couronne comportant une cage cylindrique à l'intérieur de laquelle pénètrent les gaz d'échappement en vue de leur filtrage. La cage est pourvue intérieurement d'une électrode centrale alimentée en énergie électrique et adaptée pour provoquer une émission d'électrons. En fonctionnement, les particules véhiculées par les gaz d'échappement sont principalement chargées négativement par les électrons émis par l'électrode. Les particules, ainsi chargées, viennent se fixer sur un substrat métallique. Cependant, le mouvement des particules chargées dans la cage cylindrique comporte une composante essentiellement longitudinale, la mobilité de ces particules dans la direction transversale étant relativement faible. Dès lors, la probabilité de fixation des particules sur le substrat est relativement faible.

On pourra également se référer au brevet US 4 478 613 qui décrit un ensemble de filtrage de particules contenu dans des gaz d'échappement comprenant un filtre électrostatique et un séparateur mécanique de particules. Le filtre électrostatique comprend un élément tubulaire ayant une de ses extrémités fermée, à l'intérieur duquel se trouve un empilement de disques concentriques par rapport à l'axe du tube. Le tube est maintenu à un potentiel nul alors que les disques sont reliés à un potentiel négatif. Les gaz d'échappement pénètrent dans le tube par une ouverture et circulent axialement pour ressortir par une ouverture opposée.

Les disques, portés à un potentiel négatif, constituent une structure émissive permettant de générer un champ électrique entre la surface intérieure du tube et les disques. Les gaz d'échappement traversent ce champ, les particules contenues dans les gaz d'échappement étant chargées électriquement. Les particules ainsi chargées se déplacent radialement sous l'effet du champ électrique créé pour aller se déposer sur la face interne du tube où elles forment des amas de particules.

Les amas de particules sont alors détachés de l'intérieur du tube et sont amenés jusqu'à un séparateur centrifuge.

Comme on le conçoit, comme dans l'ensemble de filtrage de gaz décrit dans la demande de brevet WO 01/19525, les particules chargées se déplacent essentiellement axialement en étant entraînées par les gaz d'échappement, la composante radiale du mouvement des particules étant relativement faible. Il est donc nécessaire de fournir une énergie d'alimentation des disques très élevée pour que la migration radiale sous l'effet du champ électrique créé soit suffisamment rapide pour que les particules viennent se déposer sur la face interne du tube. De plus, le détachement des particules amassées sur la paroi interne du tube nécessite un dispositif particulier.

La demande US4871515 décrit un filtre à particules comprenant une paroi délimitant intérieurement un passage pour les gaz d'échappement raccordé en sortie d'un collecteur d'échappement d'un moteur à combustion interne et une électrode axiale disposée dans le filtre pour dévier les particules vers des moyens de piégeage sous l'action d'un champ électrique transversal.

La demande FR834510 décrit un autre type de dispositif de filtrage pour gaz d'échappement de moteur à combustion interne. Ce dispositif comporte une enceinte munie intérieurement d'une électrode axiale pourvue d'un ensemble de plaques en forme de disque régulièrement disposées le long de l'enceinte. La surface périphérique interne de l'enceinte est pourvue d'un ensemble correspondant d'éléments annulaires délimitant avec des plaques des chicanes. Ces éléments annulaires sont raccordés à la masse et constituent ainsi des moyens de piégeage des particules.

Au vu de ce qui précède, le but de l'invention est de pallier les inconvénients de l'état de la technique et de fournir un filtre à particules pour le traitement de gaz d'échappement d'un moteur à combustion interne de véhicule automobile permettant de capter efficacement les particules véhiculées par les gaz d'échappement.

L'invention a donc pour objet un filtre à particules pour le traitement des gaz d'échappement issus d'un moteur à combustion interne de véhicule automobile, comprenant une enceinte comportant une paroi délimitant intérieurement un conduit pour les gaz d'échappement raccordé directement, en entrée, au collecteur d'échappement du moteur et, en sortie, à une conduite d'évacuation des gaz d'échappement filtrés, une électrode axiale interne adaptée pour créer un champ électrique radial dans le conduit et un ensemble de tronçons annulaires disposés transversalement dans le conduit pour arrêter les particules agglomérées déviées par le champ électrique.

Ainsi, grâce à la présence des tronçons prévus transversalement sur le trajet des particules déviées, des obstacles sont créés le long de la paroi interne de l'enceinte pour constituer des butées qui arrêtent les particules déviées.

Selon une autre caractéristique de l'invention, le filtre comporte une résistance électrique chauffante pour brûler les particules arrêtées entre les tronçons.

La résistance électrique peut être constituée par une résistance filaire qui s'étend axialement dans l'enceinte en traversant les tronçons annulaires.

Elle peut cependant également être réalisée sous la forme d'une résistance annulaire disposée transversalement dans l'enceinte au voisinage de l'un des tronçons, les tronçons étant alors chacun pourvus d'un orifice axial pour propager la combustion des particules initiée dans l'enceinte, entre les plaques, par la résistance.

La résistance électrique peut être une résistance annulaire disposée dans l'enceinte sur au moins une des faces d'au moins un des tronçons.

Dans un mode de réalisation, les plaques annulaires sont disposées dans un cylindre ajouré délimitant avec la paroi du dispositif de capture et d'élimination un passage pour les particules arrêtées entre les tronçons ou un volume de stockage desdites particules.

Le cylindre ajouré peut avoir la forme d'une grille.

Dans un autre mode de réalisation, ladite paroi comporte, à l'endroit des tronçons annulaires, une zone de diamètre interne élargi pour délimiter un passage pour les particules agglomérées arrêtées entre les tronçons ou un volume pour le stockage de ces particules.

Selon une autre caractéristique de l'invention, les tronçons annulaires sont pourvus chacun d'un passage central coaxial à la paroi et de dimensions aptes à éviter l'apparition de pertes de charge dans le flux du gaz d'échappement.

Selon un mode de réalisation particulier, les tronçons annulaires sont réalisés sous la forme de plaques annulaires rapportées.

Ces tronçons peuvent également être formés dans un tube ouvragé disposé dans l'enceinte.

L'invention a également pour objet un procédé de filtrage des gaz d'échappement issus d'un moteur à combustion interne d'un véhicule automobile au moyen d'un filtre à particules tel que défini ci-dessus, caractérisé en ce qu'il comprend les étapes consistant à :
- mettre en circulation les gaz d'échappement dans le conduit;
- dévier les particules vers les plaques annulaires sous l'effet du champ électrique engendré par l'électrode axiale interne ;
- piéger les particules entre les tronçons annulaires ; et
- permettre leur destruction in situ ou permettre l'extraction des particules arrêtées vers un dispositif de destruction par aspiration d'un petit flux de gaz.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1 est une vue en coupe d'un filtre à particules conforme à l'invention ;
- la figure 2 illustre un autre exemple de réalisation du filtre à particules de la figure 1 ;
- la figure 3 illustre un troisième mode de réalisation du filtre à particules de la figure 1 ;
- la figure 4 montre un quatrième mode de réalisation d'un filtre à particules conforme à l'invention ;
- la figure 5 illustre un cinquième mode de réalisation d'un filtre à particules selon l'invention ;
- la figure 6 illustre un sixième mode de réalisation d'un filtre à particules selon l'invention ; et
- la figure 7 est une vue en perspective montrant la construction interne d'un mode de réalisation particulier d'un filtre à particules selon l'invention.

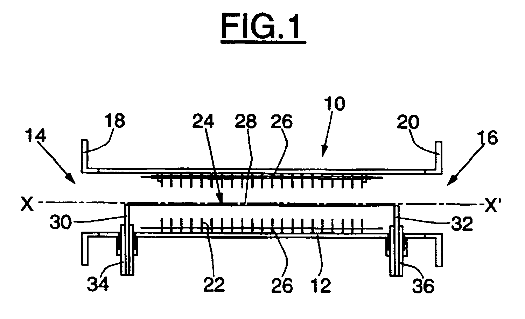

En référence à la figure 1, on va tout d'abord décrire un premier mode de réalisation d'un filtre à particules selon l'invention, désigné par la référence numérique générale 10.

Ce filtre 10 comprend essentiellement une enceinte 12 délimitée par une paroi généralement cylindrique munie de deux extrémités ouvertes mutuellement opposées 14 et 16 pourvues chacune d'une bride de fixation 18 et 20 pour la fixation du filtre à particules 10 à une canalisation dans laquelle circulent les gaz d'échappement à traiter.

Plus particulièrement, l'extrémité ouverte 14 est destinée à être directement raccordée en sortie du collecteur d'échappement d'un moteur à combustion interne de véhicule automobile, tandis que l'extrémité 16 est destinée à être raccordée à une conduite d'évacuation des gaz d'échappement.

L'enceinte 12 possède un axe de symétrie axial X-X'.

Le filtre 10 est muni, intérieurement, d'un ensemble de plaques annulaires, telles que 22, régulièrement disposées transversalement le long de l'axe X-X' dans l'enceinte 12.

En particulier, chaque plaque 22 est munie d'un passage central 24 de sorte qu'elles forment conjointement un passage pour les gaz d'échappement. Elles possèdent un diamètre externe correspondant sensiblement au diamètre interne de la paroi 12. Elles sont fixées dans la paroi 12 au moyen de tiges filetées 26 munies d'espaceurs disposés entre deux plaques adjacentes 22. Ainsi, les plaques, qui sont maintenues en compression contre les espaceurs par la tige filetée, restent amovibles et peuvent être retirés de la canalisation dans laquelle elles sont fixées.

On voit enfin sur la figure 1 que le filtre est pourvu d'une électrode centrale interne 28 disposée selon l'axe X-X' du filtre 10. Cette électrode 28 comporte une portion médiane linéaire prolongée à ces deux extrémités par deux portions 30 et 32 transversales traversant la paroi 12 avec interposition d'un isolateur 34 et 36 pour être raccordée à une source de tension (non représentée).

L'électrode centrale 28 est portée à un potentiel positif ou négatif suffisant pour que les particules présentes dans les gaz d'échappement traversent un milieu ionisé. Ainsi, lorsqu'une particule rencontre une molécule ionisée ou un électron libre, la recombinaison qui se produit provoque la génération d'une particule chargée positivement ou négativement.

Par ailleurs, le champ électrique, quasiment homogène dans l'enceinte 12, dévie les particules chargées qui migrent radialement vers les plaques annulaires 22, tout en continuant à être entraînées axialement dans le filtre 10.

Dès qu'une particule atteint une plaque 22, elle est stoppée et reste piégée dans l'espace formé entre deux plaques successives.

Les particules ainsi piégées sont ainsi extraites du flux de gaz d'échappement issu du moteur à combustion interne.

Il a en outre été constaté qu'un tel filtre à particules n'occasionne pas de réintroduction d'amas de particules piégées dans le flux de gaz d'échappement.

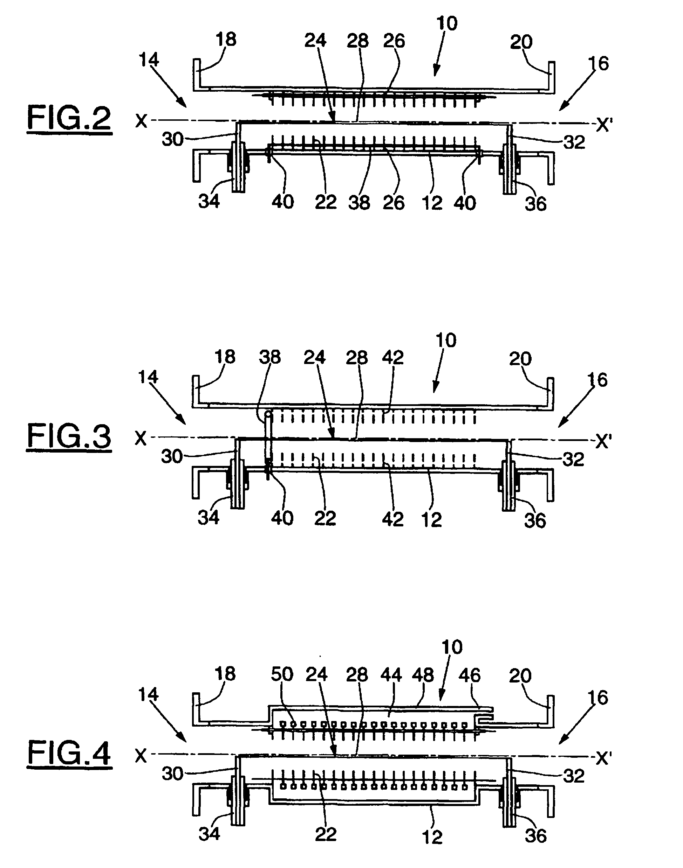

On va maintenant décrire en référence aux figures 2 à 7, sur lesquelles des éléments identiques à ceux de la figure 1 portent les mêmes références, d'autres modes de réalisation d'un filtre à particules selon l'invention.

En se référant tout d'abord aux figures 2 et 3, selon deux modes de réalisation avantageux, le filtre à particules 10 est en outre pourvu d'une résistance chauffante induisant la mise en combustion locale des particules piégées entre les plaques.

Dans le mode de réalisation représenté sur la figure 2, la résistance chauffante, désignée par la référence numérique 38, se présente sous la forme d'une résistance filaire qui s'étend parallèlement à l'axe X-X' du filtre, en traversant les plaques. Cette résistance traverse la paroi 12 du filtre 10 pour être raccordée à une source de tension. Elle est à cet effet pourvue d'isolateurs tels que 40 qui assurent une isolation entre l'électrode chauffante 38 et la paroi 12.

Dans le mode de réalisation représenté sur la figure 3, la résistance chauffante 38 a une forme annulaire et est disposée en amont, en considérant la circulation des gaz d'échappement dans le filtre, contre la face d'une plaque 22 d'extrémité tournée vers l'orifice 14. Dans ce cas, afin de permettre une propagation de la combustion le long du filtre, d'une plaque à une autre, de manière à brûler toutes les particules piégées entre les plaques, les plaques 22 sont chacune pourvues d'un ou de plusieurs orifices 42 axiaux de sorte que les orifices des plaques soient, par exemple, disposés coaxialement. Selon un autre mode de réalisation, au moins une plaque 22 peut être munie d'une résistance chauffante de forme annulaire, positionnée contre sa face amont ou aval ou les deux.

Selon un quatrième mode de réalisation, représenté sur la figure 4, le filtre 10 comporte un volume de stockage 44 des particules piégées. Dans ce cas, la paroi 12 du filtre 10 comporte localement, à l'endroit des plaques 22, une zone 48 de diamètre élargi de sorte que le bord périphérique externe des plaques soit espacé de la surface interne de la paroi 12 de manière à délimiter l'espace 44 de stockage des particules. Dans ce cas, la paroi de l'enceinte est avantageusement pourvue d'un passage 46 pour évacuer les particules ou suies piégées dans l'espace 44 vers un dispositif de destruction des suies (non représenté).

Comme on le voit sur la figure 4 selon ce mode de réalisation, les plaques sont avantageusement disposées et maintenues dans un cylindre ajouré 50. Ce cylindre 50 se présente par exemple sous la forme d'une grille perforée dont les perforations sont suffisamment grandes pour laisser passer les amas de particules.

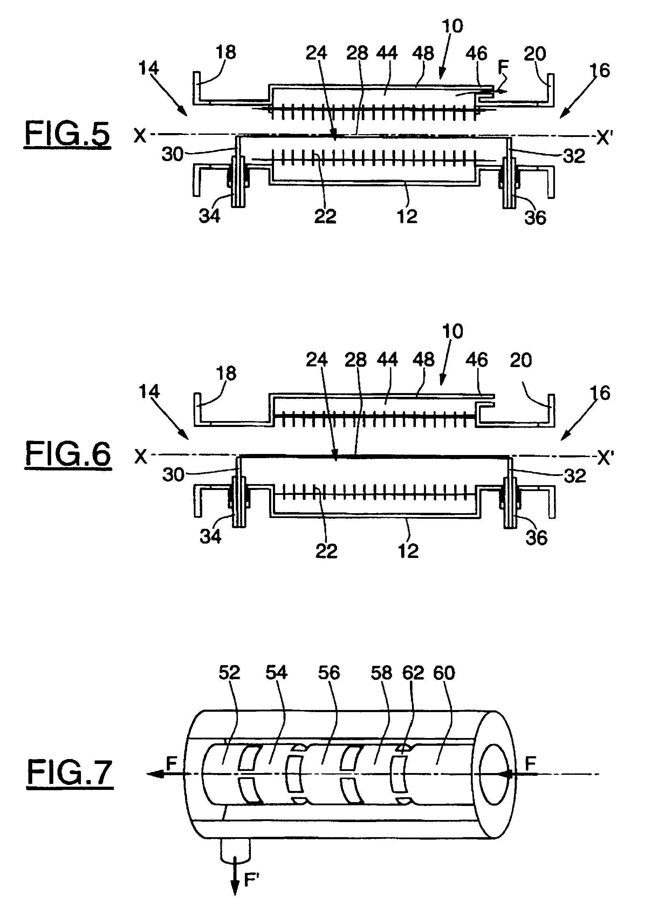

Comme visible sur la figure 5, le cylindre 50 est optionnel, les particules circulant entre les plaques 22 étant, dans ce cas, directement transférées dans le volume 44 de stockage pour être ensuite évacuées vers le dispositif de destruction de suies en passant par le passage 46 (flèche F).

Enfin, comme visible sur la figure 6, il est possible de doter le filtre de plaques 22 dont l'orifice central présente un diamètre accru, pouvant jusqu'au diamètre interne de la paroi 12 à l'endroit des extrémités 14 et 16 de manière à déporter radialement les plaques par rapport à l'écoulement des gaz d'échappement afin d'éviter l'apparition de pertes de charge.

On notera enfin que dans les différents modes de réalisation décrits précédemment, les plaques 22 sont réalisées sous la forme d'éléments rapportés fixés dans la paroi 12 au moyen de tiges filetées 26.

Il est également possible, en variante, comme représenté à la figure 7, de remplacer les plaques parallèles par des tronçons de cylindre 52, 54, 56, 58 et 60 disposés coaxialement dans la paroi 12 et réunis par des entretoises telles que 62. L'ensemble constitué par les tronçons et les entretoises peut être obtenu en ouvrageant un tube plein. Comme on le voit sur cette figure 7, sur laquelle les flèches F représentent le flux de gaz d'échappement et les flèches F' représentent la trajectoire des particules, les tronçons de cylindre sont pourvus d'un passage axial pour le passage des gaz d'échappement. L'espace entre deux tronçons consécutifs constitue, par contre, un passage pour les particules qui sont récupérées par aspiration dans le volume annulaire délimité par la paroi 12 et par les tronçons de cylindre pour être évacués, en sortie, pour être traités par un dispositif de destruction des suies.

## Revendications

1. Filtre à particules pour le traitement des gaz d'échappement issus d'un moteur à combustion interne de véhicule automobile, comprenant :
- une enceinte (12) comportant une paroi délimitant intérieurement un conduit pour les gaz d'échappement raccordé directement en entrée au collecteur d'échappement du moteur et en sortie à une conduite d'évacuation des gaz d'échappement filtrés,
- une électrode axiale (28) interne adaptée pour créer un champ électrique radial dans le conduit, et
- un ensemble de tronçons annulaires (22 ; 52, 54, 56, 58, 60) disposés transversalement dans le conduit pour arrêter les particules agglomérées déviées par le champ électrique, **caractérisé en ce qu'**il comporte une résistance électrique chauffante (38) pour brûler les particules déviées entre les tronçons annulaires, la résistance électrique étant une résistance annulaire (38) disposée transversalement dans l'enceinte au voisinage de l'un des tronçons annulaires, et **en ce que** les tronçons annulaires sont chacun pourvus d'un orifice axial (42) pour propager la combustion des particules dans l'enceinte entre les tronçons annulaires.

2. Filtre à particules selon la revendication 1, **caractérisé en ce que** la résistance électrique annulaire (38) est disposée dans l'enceinte (12) sur au moins une des faces d'au moins un des tronçons.

3. Filtre à particules selon l'une quelconque des revendications 1 à 2, **caractérisé en ce que** les tronçons annulaires sont disposés dans un cylindre ajouré délimitant avec la paroi de l'enceinte (12) un espace (44) de stockage des particules arrêtées ou un conduit d'évacuation desdites particules.

4. Filtre à particules selon la revendication 3, **caractérisé en ce que** le cylindre ajouré forme une grille.

5. Filtre à particules selon la revendication 3, **caractérisé en ce que** la paroi comporte à l'endroit des tronçons annulaires une zone (48) de diamètre interne élargi pour délimiter l'espace (44) de stockage des particules arrêtées ou le conduit d'évacuation desdites particules.

6. Filtre à particules selon l'une quelconque des revendications 1 à 5, **caractérisé en ce que** les tronçons annulaires sont pourvus d'un passage (24) central coaxial à la paroi de dimension apte à éviter l'apparition de pertes de charge dans le flux du gaz d'échappement.

7. Filtre à particules selon l'une quelconque des revendications 1 à 6, **caractérisé en ce que** les tronçons annulaires sont réalisés sous la forme de plaques annulaires (22) rapportées.

8. Filtre à particules selon l'une quelconque des revendications 1 à 6, **caractérisé en ce que** les tronçons annulaires (52, 54, 56, 58, 60) sont formés dans un tube ouvragé disposé dans l'enceinte.

9. Procédé de filtrage des gaz d'échappement issus d'un moteur à combustion interne d'un véhicule automobile au moyen d'un filtre à particules selon l'une quelconque des revendications 1 à 8, **caractérisé en ce qu'**il comporte les étapes de :
- mise en circulation des gaz d'échappement dans le conduit ;
- déviation des particules agglomérées vers les tronçons (26 ; 52, 54, 56, 58, 60) annulaires sous l'effet du champ électrique engendré par l'électrode axiale interne ;
- arrêter les particules entre les tronçons ;
- permettre leur destruction in-situ ou permettre l'extraction des particules arrêtées vers un dispositif de destruction par aspiration d'un petit flux de gaz.

## Claims

1. Particulate filter for treating the exhaust gases of a motor vehicle internal combustion engine, comprising:
-- a chamber (12) comprising a wall internally bounding a line for the exhaust gases connected directly at the inlet to the engine exhaust manifold and at the outlet to a filtered exhaust gas discharge line,
-- an internal axial electrode (28) suitable for creating a radial electric field in the line, and
-- a series of annular sections (22; 52, 54, 56, 58, 60) placed transversally in the line to stop the aggregated particulates diverted by the electric field, **characterized in that** it comprises an electric heating resistance (38) for burning the particulates diverted between the annular sections, the electric resistance being an annular resistance (38) placed transversally in the chamber close to one of the annular sections, and **in that** the annular sections are each provided with an axial orifice (42) for propagating the combustion of the particulates in the chamber between the annular sections.

2. Particulate filter according to Claim 1, **characterized in that** the annular electric resistance (38) is placed in the chamber (12) on at least one of the sides of at least one of the sections.

3. Particulate filter according to either of Claims 1 and 2, **characterized in that** the annular sections are placed in an openwork cylinder bounding, with the wall of the chamber (12), a space (44) for storing the arrested particulates or a line for removing the said particulates.

4. Particulate filter according to Claim 3, **characterized in that** the openwork cylinder forms a grid.

5. Particulate filter according to Claim 3, **characterized in that** the wall, at the location of the annular sections, comprises a zone (48) having an enlarged inside diameter for bounding the space (44) for storing the arrested particulates or the line for removing the said particulates.

6. Particulate filter according to any one of Claims 1 to 5, **characterized in that** the annular sections are provided with a central passage (24) coaxial with the wall having a size suitable for avoiding the appearance of pressure drops in the exhaust gas stream.

7. Particulate filter according to any one of Claims 1 to 6, **characterized in that** the annular sections are made in the form of joined annular plates (22).

8. Particulate filter according to any one of Claims 1 to 6, **characterized in that** the annular sections (52, 54, 56, 58, 60) are formed in a structured tube placed in the chamber.

9. Method for filtering the exhaust gases of a motor vehicle internal combustion engine using a particulate filter according to any one of Claims 1 to 8, **characterized in that** it comprises the steps of:
-- circulating the exhaust gases in the line;
-- diverting the aggregated particulates towards the annular sections (26; 52, 54, 56, 58, 60) under the effect of the electric field generated by the internal axial electrode;
-- arresting the particulates between the sections;
-- permitting their in situ destruction or permitting the extraction of the arrested particulates towards a device for destruction by tapping off a small gas stream.

## Patentansprüche

1. Partikelfilter zur Behandlung der von einem Verbrennungsmotor eines Kraftfahrzeugs stammenden Abgase, der aufweist:
- eine Umhüllung (12), die eine Wand aufweist, die innen einen Kanal für die Abgase begrenzt, der direkt am Eingang an den Auspuffkrümmer des Motors und am Ausgang an eine Ableitung der gefilterten Abgase angeschlossen ist,
- eine innere axiale Elektrode (28), die geeignet ist, um ein radiales elektrisches Feld in dem Kanal zu bilden, und
- eine Einheit von ringförmigen Abschnitten (22; 52, 54, 56, 58, 60), die quer in dem Kanal angeordnet sind, um die agglomerierten Partikel anzuhalten, die von dem elektrischen Feld umgeleitet werden,
**dadurch gekennzeichnet, dass** er einen elektrischen Heizwiderstand (38) aufweist, um die zwischen den ringförmigen Abschnitten umgeleiteten Partikel zu verbrennen, wobei der elektrische Widerstand ein ringförmiger Widerstand (38) ist, der quer in der Umhüllung in der Nähe eines der ringförmigen Abschnitte angeordnet ist, und dass die ringförmigen Abschnitte je mit einer axialen Öffnung (42) versehen sind, um die Verbrennung der Partikel in der Umhüllung zwischen den ringförmigen Abschnitten auszubreiten.

2. Partikelfilter nach Anspruch 1, **dadurch gekennzeichnet, dass** der ringförmige elektrische Widerstand (38) in der Umhüllung (12) auf mindestens einer der Seiten mindestens eines der Abschnitte angeordnet ist.

3. Partikelfilter nach einem der Ansprüche 1 bis 2, **dadurch gekennzeichnet, dass** die ringförmigen Abschnitte in einem gelochten Zylinder angeordnet sind, der mit der Wand der Umhüllung (12) einen Speicherraum (44) für die angehaltenen Partikel oder einen Ableitkanal für die Partikel bildet.

4. Partikelfilter nach Anspruch 3, **dadurch gekennzeichnet, dass** der gelochte Zylinder ein Gitter bildet.

5. Partikelfilter nach Anspruch 3, **dadurch gekennzeichnet, dass** die Wand an der Stelle der ringförmigen Abschnitte eine Zone (48) mit einem verbreiterten Innendurchmesser aufweist, um den Speicherraum (44) der angehaltenen Partikel oder den Ableitkanal der Partikel zu begrenzen.

6. Partikelfilter nach einem der Ansprüche 1 bis 5, **dadurch gekennzeichnet, dass** die ringförmigen Abschnitte mit einem zentralen Durchgang (24) koaxial zur Wand mit einer Abmessung versehen sind, die geeignet ist, das Auftreten von Druckverlusten im Abgasfluss zu vermeiden.

7. Partikelfilter nach einem der Ansprüche 1 bis 6, **dadurch gekennzeichnet, dass** die ringförmigen Abschnitte in Form von angesetzten ringförmigen Platten (22) hergestellt werden.

8. Partikelfilter nach einem der Ansprüche 1 bis 6, **dadurch gekennzeichnet, dass** die ringförmigen Abschnitte (52, 54, 56, 58, 60) in einem ausgearbeiteten Rohr geformt werden, das in der Umhüllung angeordnet ist.

9. Verfahren zur Filterung der von einem Verbrennungsmotor eines Kraftfahrzeugs stammenden Abgase mittels eines Partikelfilters nach einem der Ansprüche 1 bis 8, **dadurch gekennzeichnet, dass** es die folgenden Schritte aufweist:
- Strömen der Abgase in dem Kanal;
- Umleitung der agglomerierten Partikel zu den ringförmigen Abschnitten (26; 52, 54, 56, 58, 60) unter der Wirkung des elektrischen Felds, das von der inneren axialen Elektrode erzeugt wird;
- Anhalten der Partikel zwischen den Abschnitten;
- Ermöglichen ihrer Zerstörung vor Ort oder Ermöglichen der Entnahme der angehaltenen Partikel zu einer Zerstörungsvorrichtung durch Ansaugen eines kleinen Gasflusses.
